# EUROPÄISCHE PATENTANMELDUNG

(11) **EP 1 052 431 A2**
(43) Veröffentlichungstag der Anmeldung: **15.11.2000**
(21) Anmeldenummer: 00109872.2
(22) Anmeldetag: 10.05.2000
(51) Int. Cl.: F16H 59/04, F16H 63/34

(54) **Schaltvorrichtung für ein Fahrzeuggetriebe**

(30) Priorität: 12.05.1999 DE 19922010
(71) Anmelder: DEERE & COMPANY, Moline, Illinois 61265-8098 (US)
(72) Erfinder: Fritz, Martin, 79206 Gündlingen (DE); Rückert, Dieter, 68799 Reilingen (DE)
(74) Vertreter: Lau-Loskill, Philipp, Dipl.-Phys.

(57) **Zusammenfassung**

Es wird eine Schaltvorrichtung für Fahrzeuggetriebe, insbesondere für Schaltgetriebe landwirtschaftlicher oder gewerblicher Fahrzeuge, beschrieben, die räumlich getrennt von dem Fahrzeuggetriebe angeordnet ist und mit dem Fahrzeuggetriebe über Schaltstangen (32, 34) oder Schaltzüge in Verbindung steht. Die Schaltvorrichtung enthält wenigstens einen schwenkbar in einem Gehäuse (10) gelagerten, dem Schalten der Gänge dienenden Schalthebel (18). Der Schalthebel (18) greift mit seinem im Gehäuseinneren liegenden Eingriffsbereich (30) in parallel zueinander verschiebbar gelagerte Übertragungselemente (22, 24) ein und wird durch eine Rückstelleinrichtung (54) in eine Neutralstellung gedrängt. An den Übertragungselementen (22, 24) ist jeweils wenigstens eine mit dem Fahrzeuggetriebe in Verbindung stehende Schaltstange (32, 34) oder wenigstens ein Schaltzug befestigt.

Um Sicherheitsrisiken auszuschließen, die durch das ungewollte Einlegen eines Ganges während Wartungs- und Reparaturarbeiten auftreten können, wird vorgeschlagen, daß der seine Neutralstellung einnehmende Schalthebel (18) mit seinem Eingriffsbereich (30) gleichzeitig mit wenigstens zwei Übertragungselementen (22, 24) zusammenwirkt, wodurch eine Relativverschiebung der Übertragungselemente (22, 24) zueinander und damit das Einlegen eines Ganges verhindert wird.

## Beschreibung

Die Erfindung betrifft eine Schaltvorrichtung für Fahrzeuggetriebe, insbesondere für Schaltgetriebe landwirtschaftlicher oder gewerblicher Fahrzeuge, die räumlich getrennt von dem Fahrzeuggetriebe angeordnet ist und mit dem Fahrzeuggetriebe über Schaltstangen oder Schaltzüge in Verbindung steht. Die Schaltvorrichtung enthält wenigstens einen schwenkbar in einem Gehäuse gelagerten, dem Schalten der Gänge dienenden Schalthebel. Der Schalthebel tritt mit seinem im Gehäuseinneren liegenden Eingriffsbereich mit parallel zueinander verschiebbar gelagerten Übertragungselementen in Eingriff und wird durch eine Rückstelleinrichtung in eine Neutralstellung gedrängt. An den Übertragungselementen ist jeweils wenigstens eine mit dem Fahrzeuggetriebe in Verbindung stehende Schaltetange oder wenigstens ein Schaltzug befestigt. Als Fahrzeuggetriebe kommen sowohl ein Gangschaltgetriebe als auch ein Gruppenschaltgetriebe, wie sie beispielsweise bei Ackerschleppern verwendet werden, in Betracht, so daß sich durch die Schaltvorrichtung Gänge oder Gruppen schalten lassen.

Bei einer derartigen, aus der EP-C-0 696 698 bekannten Schaltvorrichtung nimmt der Schalthebel im Bereich seiner Wählgasse eine sich selbst einstellende Neutralposition ein, die in der zur Wählgasse quer verlaufenden Schaltgasse für den dritten und vierten Gang liegt. Aus seiner Neutralposition läßt sich der Schalthebel innerhalb der genannten Schaltgasse verschwenken, wobei ein dem dritten und vierten Gang zugeordnetes Übertragungselement verschoben wird. Das Übertragungselement überträgt über einen Schaltzug die Schwenkbewegungen des Schalthebels auf ein Schaltgetriebe, um den dritten bzw. vierten Gang einzustellen.

Die bekannte Schaltvorrichtung erfüllt nicht alle Sicherheitswünsche, denn bei Reparatur- und Wartungsarbeiten könnte eine Person durch Manipulation oder unbeabsichtigtes Bedienen einer Schaltetange oder eines Schaltzugs diese unter Mitnahme des zugehörigen Übertragungselements verschieben und einen Gang des Getriebes einlegen. Hierdurch könnte sich bei laufendem Motor das Fahrzeug unerwartet in Bewegung setzen und die Person gefährden.

Die der Erfindung zugrunde liegende Aufgabe wird darin gesehen, eine Schaltvorrichtung der eingangs genannten Art anzugeben, durch welche die genannten Sicherheitsrisiken vermieden werden. Insbesondere soll es nicht möglich sein, einen Gang des Getriebes einzulegen, sofern sich der Schalthebel in seiner sich selbst zentrierenden Neutralstellung befindet.

Die Aufgabe wird erfindungsgemäß durch die Lehre des Patentanspruche 1 gelöst. Weitere vorteilhafte Ausgestaltungen und Weiterbildungen der Erfindung gehen aus den Unteransprüchen hervor.

Durch die erfindungsgemäße Schaltvorrichtung ergibt sich dann, wenn sich der Schalthebel in Neutralstellung befindet, eine Verriegelung der Übertragungselemente und Schaltstangen bzw. Schaltzüge, die ein unbeabsichtigtes Einlegen eines Ganges oder einer Gruppe durch Manipulationen am Schaltgestänge unmöglich macht. Erst wenn der Schalthebel aus seiner Neutralstellung heraus bewegt wird, wird die Verriegelung aufgehoben, so daß ein Gang oder eine Gruppe eingelegt werden kann.

Die Besonderheit der Erfindung ist es, daß der Schalthebel nach dem Auslegen des Ganges oder der Gruppe ohne Zutun der Bedienungsperson in seine Neutralstellung zurückgleitet. Dabei greift das freie Ende des Schalthebels gleichzeitig in wenigstens zwei Übertragungselemente ein, wodurch diese gekoppelt werden und sich nicht unabhängig voneinander verschieben lassen. Wird bei Reparatur- und Wartungsarbeiten versehentlich oder absichtlich auf eine Schaltstange eine Schub- oder Zugkraft ausgeübt, so wird diese Kraft durch die Kopplung gleichzeitig auf die andere Schaltstange übertragen. Eine gleichzeitige Verschiebung zweier Schaltstangen ist jedoch nicht möglich, wenn beispielsweise ein Verriegelungsmechanismus im Getriebe vorgesehen ist, der ein gleichzeitiges Einlegen zweier Gänge oder Gruppen unterbindet. Bei Vorliegen einer erfindungsgemäßen Schaltvorrichtung kann eine Person, die bei laufendem Motor den Führerstand verläßt, durch Manipulationen oder unbeabsichtigtes Bedienen der Schaltstangen oder Schaltzüge keinen Gang oder keine Gruppe einlegen und sich dadurch selbst in Gefahr bringen.

In vorteilhafter Weise befindet sich der Eingriffsbereich des Schalthebels am Schalthebelende. Das Schalthebelende greift in Ausnehmungen oder Übertragungskulissen der Übertragungselemente ein, um die Übertragungselemente zum Einstellen von Gängen verschieben zu können. Vorzugsweise trägt das freie Ende des Schalthebels einen Gleitstein, der kantig ausgebildet sein kann und einen zuverlässigen Eingriff zwischen dem Schalthebel und den Übertragungselementen ermöglicht.

Insbesondere zum Schalten von drei oder vier unterschiedlichen Gängen oder Gruppen ist es von Vorteil eine Schaltvorrichtung zu verwenden, bei der zwei nebeneinander oder übereinander liegende Übertragungselemente im Gehäuse geführt sind. Durch Hin- und Herverschiebung jeder der beiden Übertragungselemente kann eine Auswahl zwischen jeweils zwei Gängen vorgenommen werden.

Die Übertragungselemente liegen vorzugsweise eng nebeneinander, so daß auch ihre Ausnehmungen oder Übertragungskulissen eng benachbart zueinander sind. Wenn sich der Schalthebel in seiner sich selbst zentrierenden Neutralstellung befindet, greift der Eingriffsbereich des Schalthebels gleichzeitig in Übertragungskulissen benachbarter Übertragungselemente ein und verriegelt letzte gegeneinander.

Gemäß einer bevorzugten Weiterbildung der Erfindung ist der Schalthebel in einer Schaltkulisse geführt, die den Schalthebel in vorgegebenen Bahnen führt und seine Schwenkbewegung begrenzt. Die Schaltkulisse ist derart ausgebildet, daß sich der Schalthebel nicht aus seiner Neutralstellung in Längsrichtung verschwenken läßt, um die mit ihm in Eingriff stehenden Übertragungselemente zu verschieben. Wenn sich der Schalthebel in seiner Neutralstellung befindet, ergibt sich somit eine Verriegelung, die ein gleichzeitiges Verschieben der Übertragungselemente unterbindet, so daß das Einlegen eines Gang des Getriebes nicht möglich ist.

Zum Schalten von drei oder vier Gängen oder Gruppen wird der Schalthebel vorzugsweise in einer im wesentlichen H-förmigen Schaltkulisse geführt, die zwei seitliche Schaltgassen und eine mittlere die Schaltgassen verbindende Wählgasse enthält. Die Neutralstellung des Schalthebels nimmt eine Position in der Wählgasse ein, die nicht im Schnittpunkt mit einer Schaltgasse liegt. Die Neutralstellung liegt vorzugsweise in einem mittleren Bereich zwischen den beiden Wählgassen.

Sollen mit dem Schalthebel drei Vorwärtsgänge und ein Rückwärtsgang geschaltet werden, ist es vorteilhaft, wenn die Schaltgasse, in der die Rückwärtsgangstellung liegt, nicht geradlinig ausgerichtet ist, sondern zwei von der Wählgasse ausgehende Schenkel aufweist, die zueinander versetzt sind. Hierdurch wird verhindert, daß durch geradliniges Bewegen der Schalthebel ohne Unterbrechung aus einer Vorwärtsgangstellung in die Rückwärtsgangstellung oder umgekehrt bewegt werden kann, wodurch eine abrupte Fahrtrichtungsumkehr ausgelöst werden würde. Die gekröpfte Ausbildung der Schaltgasse zwingt zum Verharren in der Wählgasse und vermeidet, daß der Schalthebel ungewollt über die Wählgasse hinaus bewegt und die entgegengesetzte Bewegungsrichtung eingestellt wird.

Vorzugsweise ist der Schalthebel über ein Kugelgelenk in dem Gehäuse gelagert und läßt sich in wenigstens zwei Richtungen verschwenken.

Die Ausbildung der Rückstelleinrichtung, durch die der Schalthebel in seine Neutralstellung gedrängt wird, kann auf übliche Weise erfolgen. Eine bevorzugte Ausgestaltung der Erfindung schlägt hierfür jedoch vor, daß eine konzentrische Druckfeder axial zum Schalthebel angeordnet ist, die sich einenends am Gehäuse oder einem mit dem Gehäuse verbundenen Bauteil (Gehäusedeckel) und anderenends an dem Schalthebel abstützt.

Anhand der Zeichnung, die Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die perspektivische Ansicht einer erfindungsgemäßen Schaltvorrichtung ohne Gehäusedeckel,
- Fig. 2: eine perspektivische Teilschnittansicht der erfindungsgemäßen Schaltvorrichtung gemäß Fig. 1,
- Fig. 3a und 3b: je ein Schaltschema für eine Schaltvorrichtung gemäß Fig. 1 und 2 und
- Fig. 4a bis 4d: schematische Darstellungen von vier unterschiedlichen Schaltstellungen einer alternativen erfindungsgemäßen Schaltvorrichtung.

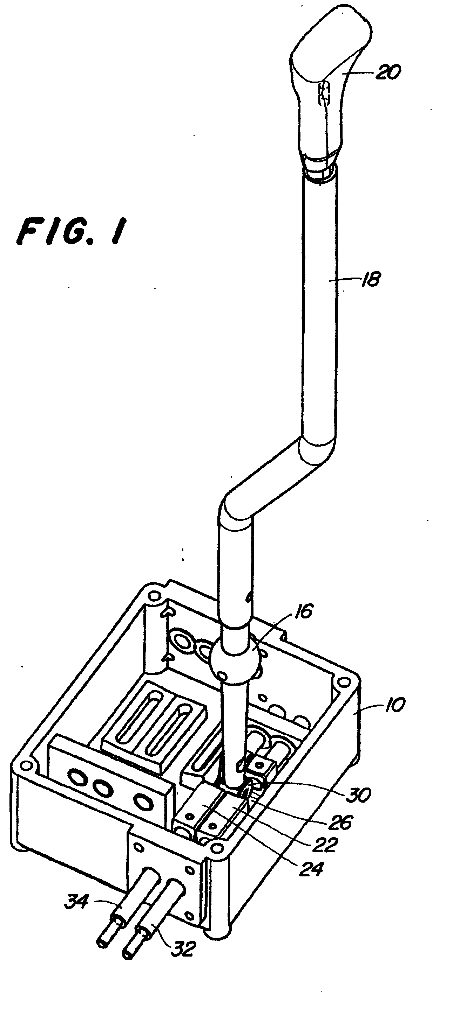

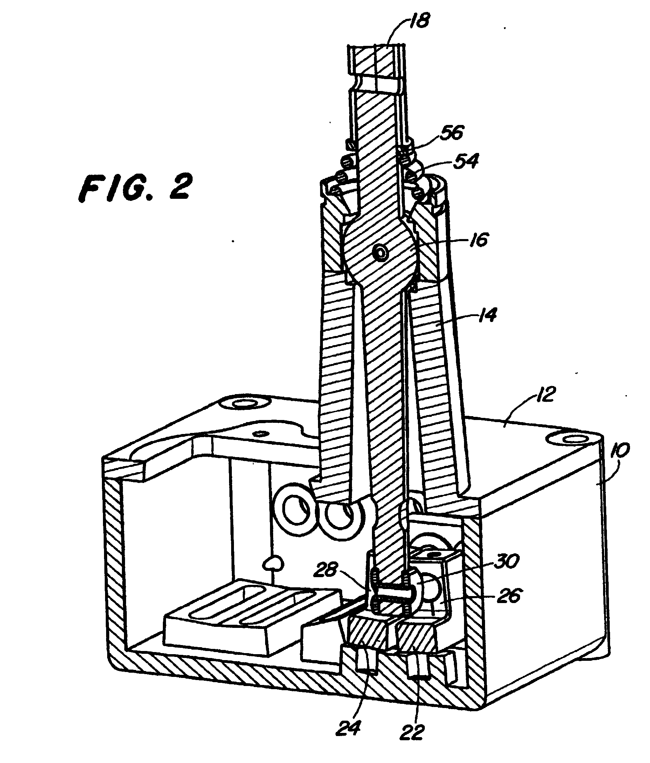

In den Figuren 1 und 2 ist eine erste erfindungsgemäße Betätigungseinrichtung zum Steuern des Gangwechsels eines Getriebes dargestellt, die einen integrierten Mechanismus zum Schutz vor unbeabsichtigtem Betätigen des Getriebes enthält. Die Betätigungseinrichtung weist ein durch einen Gehäusedeckel 12 verschließbares Gehäuse 10 auf. Der Gehäusedeckel 12 trägt einen kegelförmigen hohlen Turm 14, in dessen oberen Ende sich ein Kugelgelenk 16 befindet, in dem ein Schalthebel 18 schwenkbar gelagert ist. Das aus dem Gehäuse 10 herausragende Ende des Schalthebels 18 ist zweifach abgewinkelt und endet in einem Knauf 20, durch den eine Bedienungsperson den Schalthebel 18 verschwenken kann.

Im Bodenbereich des Gehäuses 10 sind zwei eng nebeneinander liegende Übertragungselemente 22, 24, die auch als Quadranten bezeichnet werden können, in Längsrichtung verschiebbar gelagert. Die Quadranten 22, 24 weisen jeweils eine nach oben offene Quernut 26, 28 auf, in der ein Gleitstein 30 geführt ist, der am unteren, im Gehäuseinneren liegenden Ende des Schalthebels 18 angeordnet ist. Durch Verschwenken des Schalthebels 18 in Querrichtung, läßt sich der Gleitstein 30 innerhalb der Quernuten 26, 28 von einem Quadranten 22, 24 zum anderen verschieben. In der dargestellten Mittelstellung des Schalthebels 18 befindet sich der Gleitstein 30 im Einflußbereich beider Quadranten 22, 24. Er läßt sich durch Verschwenken des Schalthebels 18 in Querrichtung aus dieser Mittelstellung derart verschieben, daß er sich nur im Einflußbereich des rechten oder des linken Quadranten 22, 24 befindet.

Jeder der beiden Quadranten 22, 24 steht über eine Schaltstange 32, 34 mit einem nicht dargestellten Schaltgetriebe in Verbindung. Befindet sich der Schalthebel 18 nicht in seiner dargestellten sich selbstzentrierenden Neutralstellung, sondern ausschließlich im Einflußbereich eines der beiden Quadranten 22, 24, so läßt sich der Schalthebel 18 in Längsrichtung verschwenken. Dadurch wird der Quadrant 22, 24 dessen Quernut 26, 28 den Gleitstein 30 aufnimmt, in Längsrichtung verschoben. Diese Bewegung wird auf das Schaltgetriebe übertragen, so daß ein entsprechender Gang eingelegt wird.

Das Schaltgetriebe kann eine Verriegelung enthalten, die die gleichzeitige Übertragung von Verschiebungen beider Quadranten 22, 24 nicht zuläßt, da dies zu widersprüchlichen Zahneingriffen innerhalb des Schaltgetriebes führen würde. Eine solche Getriebeverriegelung hat zur Folge, daß eine Verschiebung der Quadranten 22, 24 dann nicht möglich ist, wenn sich der Schalthebel 18 in seiner dargestellten Neutralstellung befindet, da dann der Gleitstein 30 im Einflußbereich beider Quadranten 22, 24 liegt und eine Verschiebung der beiden Quadranten 22, 24 relativ zueinander verhindert. Aus dieser Neutralstellung läßt sich der Schalthebel 18 somit nur in Querrichtung nicht aber in Längsrichtung verschwenken. Da die Quadranten 22, 24 in der Neutralstellung des Schalthebels 18 gegeneinander verriegelt sind, lassen sie sich auch nicht durch Zug- oder Druckkräfte, die auf die Schaltstangen 32, 34 ausgeübt werden, verschieben. Dies hat zur Folge, daß eine Bedienungsperson, die bei Wartungs- oder Reparaturarbeiten Zug- oder Druckkräfte auf die Schaltstangen 32, 34 ausübt, diese nicht verschieben kann, so daß das versehentliche Einlegen eines Ganges ausgeschlossen ist.

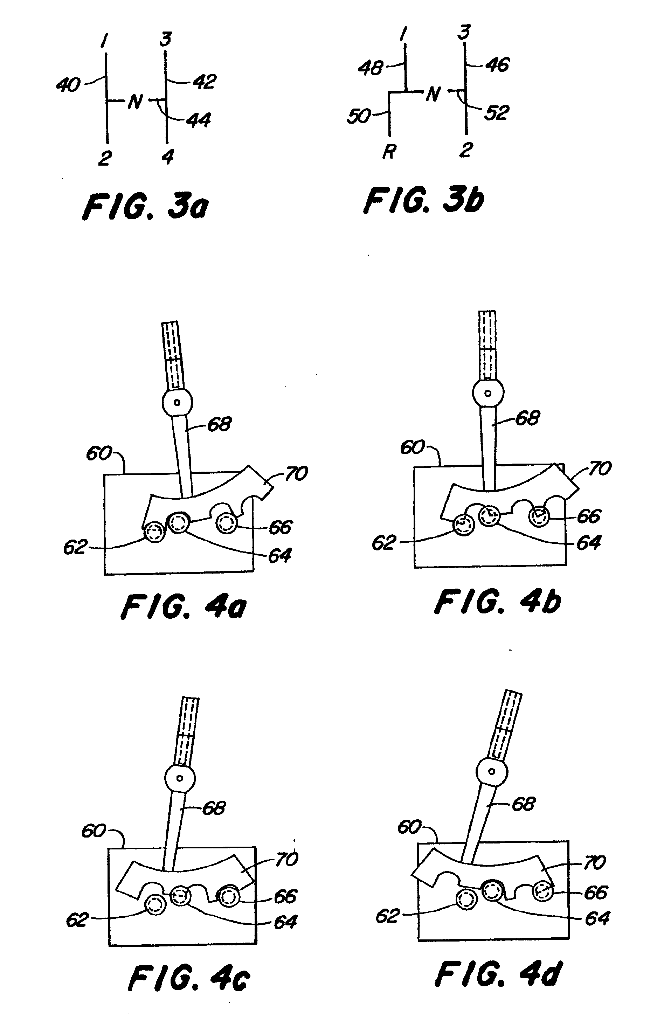

Aus Fig. 3a geht das Schema einer H-förmigen Schaltkulisse hervor, die auf übliche Weise der Führung des Schalthebels 18 dient. Der Schalthebel 18 läßt sich innerhalb der Schaltkulisse bewegen, um einen ersten, zweiten, dritten und vierten Gang einzustellen. Die Gangpositionen sind durch 1, 2, 3 und 4 bezeichnet. Die Positionen für den ersten und den zweiten Gang sind durch eine geradlinige erste Schaltgasse 40 und die Positionen für den dritten und den vierten Gang sind durch eine geradlinige zweite Schaltgasse 42 miteinander verbunden. Beide Schaltgassen verlaufen zueinander parallel. Die erste und die zweite Schaltgasse 40, 42 sind durch eine quer verlaufende Wählgasse 44 miteinander verbunden. Die Neutralstellung N des Schalthebels 18 befindet sich in einer mittleren Position der Wählgasse 44.

In Figur 3b ist eine zur Fig. 3a alternative Schaltkulisse dargestellt, welche Gangpositionen für einen ersten, zweiten und dritten Vorwärtsgang 1, 2, 3 sowie für einen Rückwärtsgang R enthält. Eine erste Schaltgasse 46 ist geradlinig ausgebildet und verbindet die Positionen des zweiten und dritten Vorwärtsganges 2, 3. Die Schaltgasse 48 für den ersten Vorwärtsgang 1 und die Schaltgasse 50 für den Rückwärtsgang R fluchten nicht miteinander, sondern Enden in der querverlaufenden Wählgasse 52, in derem mittleren Bereich sich die sich selbstzentrierende Neutralstellung N des Schalthebels befindet. Durch diese Ausbildung der Schaltkulisse ist es nicht möglich, den Schalthebel 18 ohne Unterbrechung durch eine geradlinige Bewegung von dem ersten Vorwärtsgang 1 in den Rückwärtsgang R oder umgekehrt zu verstellen. Es wird dadurch weitgehend verhindert, daß die Bedienungsperson ungewollt eine Richtungsumkehr des Fahrzeugs vornimmt.

Der Schalthebel 18 wird durch eine in Fig. 2 dargestellte Rückstelleinrichtung in seine Neutralstellung gedrängt, sofern er sich in der Wählgasse befindet. Die Rückstelleinrichtung besteht im wesentlichen aus einer kegelförmig ausgebildeten Schraubenfeder 54, die konzentrisch zum Schaft des Schalthebels 18 angeordnet ist. Das untere Ende der Schraubenfeder 54 stützt sich an dem oberen Ende des Turms 14 und das obere Ende der Schraubenfeder 54 stützt sich an einer Stufe 56 oder an einem Absatz des Schalthebels 18 ab. Die Schraubenfeder 54 ist als Druckfeder ausgebildet und drängt den Schalthebel 18 in seine senkrechte, mittlere Neutralstellung.

Anhand der Figuren 4a bis 4d wird im folgenden die Wirkungsweise einer alternativen Ausführungsform einer erfindungsgemäßen Schaltvorrichtung beschrieben. Innerhalb eines Gehäuses 60 der Schaltvorrichtung sind drei im wesentlichen als zylindrische Stangen ausgebildete Übertragungselemente 62, 64, 66, die im Schnitt dargestellt sind, verschiebbar gelagert. Die Übertragungselemente 62, 64, 66 weisen in ihrem mittleren Abschnitt je eine nach oben offene Quernut (siehe gestrichelte Mittellinien) auf. Ein verschwenkbarer Schalthebel 68 trägt an seinem unteren Ende ein Schaltblech 70, dessen untere Kante als Kurvenkontur ausgebildet ist, die mit den Übertragungselementen 62, 64, 66 in Eingriff tritt.

Gemäß Fig. 4a ist der Schalthebel 68 nach links geschwenkt. Hierbei greift ein Abschnitt der Kurvenkontur in die Quernut eines ersten Übertragungselements 62 ein. Das zweite und das dritte Übertragungselement 64, 66 stehen jedoch nicht im Eingriffsbereich des Schaltblechs 70. Durch Bewegung des Schalthebels 68 in Längsrichtung läßt sich das erste Übertragungselement 62 verschieben. Es wirkt hierbei über eine nicht näher dargestellte Schaltstange oder einen Schaltzug auf das zugehörige, nicht dargestellte Getriebe ein, so daß ein entsprechender Gang des Getriebes eingerückt wird. Das zweite und das dritte Übertragungselement 64, 66 werden gemäß Fig. 4a durch die Längsbewegung des Schalthebels 68 nicht beeinflußt und behalten ihre ursprüngliche axiale Stellung bei.

Gemäß den Figuren 4c und 4d befindet sich der Schalthebel 68 in einer ersten bzw. einer zweiten nach rechts geschwenkten Stellung. Entsprechend Fig. 4a befindet sich auch hier lediglich ein Übertragungselement (gemäß Fig. 4c das mittlere Übertragungselement 64 und gemäß Fig. 4d das rechte Übertragungselement 66) im Einflußbereich des Schaltblechs 70, während die jeweils anderen beiden Übertragungselemente (62, 66 bzw. 62, 64) frei sind. Durch Längsbewegung des Schalthebels 68 lassen sich somit weitere Gänge des Schaltgetriebes einstellen.

Gemäß Fig. 4b nimmt der Schalthebel 68 seine mittlere Neutralstellung ein. In dieser Stellung greifen Abschnitte des Schaltblechs 70 in die Quernuten aller drei Übertragungselemente 62, 64, 66 ein. Da die Schaltstangen über das Schaltgetriebe und/oder eine Schaltkulisse derart gegeneinander verriegelt sind, daß sich nicht mehr als ein Übertragungselement in Längsrichtung verschieben läßt, sind die Schaltstangen 62, 64, 66 bei der in Fig. 4b dargestellten Schalthebelstellung blockiert und lassen sich nicht bewegen. Es ist daher auch nicht möglich durch Ausübung von Schub- oder Zugkräften auf die Übertragungselemente oder Schaltstangen (ungewollt) einen Gang des Schaltgetriebes einzustellen, so daß die gewünschte Sicherheitsfunktion gegeben ist.

Auch wenn die Erfindung lediglich anhand zweier Ausführungsbeispiele beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Schaltvorrichtung für Fahrzeuggetriebe, insbesondere für Schaltgetriebe landwirtschaftlicher oder gewerblicher Fahrzeuge, wobei die Schaltvorrichtung räumlich getrennt von dem Fahrzeuggetriebe angeordnet ist und mit dem Fahrzeuggetriebe über Schaltstangen (32, 34) oder Schaltzüge in Verbindung steht und wobei die Schaltvorrichtung wenigstens einen schwenkbar in einem Gehäuse (10, 60) gelagerten, dem Schalten der Gänge dienenden Schalthebel (18, 68) enthält, der mit seinem im Gehäuseinneren liegenden Eingriffsbereich (30) mit parallel zueinander verschiebbar gelagerten Übertragungselementen (22, 24, 62, 64, 66), an denen jeweils wenigstens eine Schaltstange (32, 34) oder wenigstens ein Schaltzug befestigt ist, in Eingriff tritt und der durch eine Rückstelleinrichtung (54) in eine Neutralstellung gedrängt wird, dadurch gekennzeichnet, daß, sofern der Schalthebel (18, 68) seine Neutralstellung einnimmt, sein Eingriffsbereich (30) gleichzeitig mit wenigstens zwei Übertragungselementen (22, 24, 62, 64, 66) zusammenwirkt und eine Relativverschiebung der Übertragungselemente (22, 24, 62, 64, 66) zueinander verhindert.

2. Schaltvorrichtung nach Anspruch 1, dadurch gekennzeichnet, daß sich der Eingriffsbereich (30) des Schalthebel (18, 68) am Schalthebelende befindet.

3. Schaltvorrichtung nach Anspruch 1 oder 2, dadurch gekennzeichnet, daß das freie Ende des Schalthebels (18) einen Gleitstein (30) trägt, der sich durch Betätigung des Schalthebels (18) in Ausnehmungen (26, 28) oder Übertragungskulissen der Übertragungselemente (22, 24) bewegen läßt.

4. Schaltvorrichtung nach einem der Ansprüche 1 bis 3, dadurch gekennzeichnet, daß zwei nebeneinander oder übereinander liegende Übertragungselemente (22, 24, 62, 64, 66) im Gehäuse (10, 60) geführt sind.

5. Schaltvorrichtung nach einem der Ansprüche 1 bis 4, dadurch gekennzeichnet, daß durch den Eingriffsbereich des Schalthebels (18, 68) eng nebeneinander liegende, jeweils mit einer Schaltstange (32, 34) verbundene Übertragungselemente (22, 24, 62, 64, 66) beeinflußbar sind.

6. Schaltvorrichtung nach einem der Ansprüche 1 bis 5, dadurch gekennzeichnet, daß der Schalthebel (18, 68) in einer Schaltkulisse geführt ist, die die Schwenkbewegung des Schalthebels (18, 68) derart begrenzt, daß bei sich in Neutralstellung befindenden Schalthebel (18, 68) eine Verschiebung der Übertragungselemente (22, 24, 62, 64, 66) nicht möglich ist.

7. Schaltvorrichtung nach einem der Ansprüche 1 bis 6, dadurch gekennzeichnet, daß der Schalthebel (18, 68) in einer im wesentlichen H-förmigen Schaltkulisse geführt wird, die zwei seitliche Schaltgassen (40, 42) und eine zwischen den Schaltgassen (40, 42) verlaufende und diese verbindende Wählgasse (44) enthält, und daß die Neutralstellung (N) eine Position in der Wählgasse (44) einnimmt, die nicht im Schnittpunkt mit einer Schaltgasse (40, 42) liegt.

8. Schaltvorrichtung nach Anspruch 7, dadurch gekennzeichnet, daß wenigstens eine Schaltgasse nicht geradlinig zwei Gangpositionen (1, 2, 3, R) miteinander verbindet, sondern zwei von der Wählgasse (52) ausgehende Schenkel (48, 50) aufweist, die zueinander versetzt sind.

9. Schaltvorrichtung nach einem der Ansprüche 1 bis 8, dadurch gekennzeichnet, daß der Schalthebel (18, 68) über ein Kugelgelenk (16) in dem Gehäuse (10) gelagert ist und sich in wenigstens zwei Richtungen verschwenken läßt.

10. Schaltvorrichtung nach einem der Ansprüche 1 bis 9, dadurch gekennzeichnet, daß axial zum Schalthebel (18) eine konzentrische Druckfeder (54) angeordnet ist, die sich einenends am Gehäuse (10, 12) und anderenends an dem Schalthebel (18) abstützt und als Rückstelleinrichtung den Schalthebel (18) in seine Neutralstellung drängt.
